# EUROPEAN PATENT SPECIFICATION

(11) **EP 2 795 898 B1**
(45) Date of publication and mention of the grant of the patent: **30.05.2018**
(21) Application number: 11878322.4
(22) Date of filing: 21.12.2011
(51) Int. Cl.: H04N 5/91, H04N 21/41, H04N 21/433, H04N 21/845, G11B 27/11, H04N 5/76, H04N 21/4363

(54) **METHOD AND DEVICE FOR PLAYING MULTIMEDIA CONTENT**
VERFAHREN UND VORRICHTUNG ZUM WIEDERGEBEN VON MULTIMEDIAINHALTEN
PROCÉDÉ ET DISPOSITIF POUR LIRE UN CONTENU MULTIMÉDIA

(43) Date of publication of application: 29.10.2014
(73) Proprietor: Thomson Licensing, 92130 Issy-les-Moulineaux (FR)
(72) Inventor: ZHANG, Yanfeng, Beijing 100192 (CN); ZHANG, Zhigang, Beijing 100192 (CN); MA, Xiaojun, Beijing 100192 (CN)
(74) Representative: Novagraaf Technologies
(86) International application number: PCT/CN2011/084360
(87) International publication number: WO 2013/091193

(56) References cited:
- CN-A- 101 903 846
- US-A1- 2008 002 945
- US-A1- 2009 232 481
- US-A1- 2009 241 149
- US-A1- 2010 030 808
- US-B1- 6 868 225

## Description

### TECHNICAL FIELD

The present invention relates to multimedia content, and more particularly, relates to a method and a device for playing multimedia content.

### BACKGROUND

In advanced home network, especially in-home multimedia distribution and home gateway application, multimedia's consumption is a time-costing process, for example, it usually takes one and half hours to watch a film. During the enjoying process, lots of factors (change of current interest, other emergent tasks, or time to rest, etc.) can cause users to stop their current process. With current available systems, when a user wants to resume his multimedia process, he must reconfigure all the devices involved, find the multimedia resources, start the multimedia session from beginning, and seek to the media location according to his own memory. If the multimedia is stored in one of his devices, it is even troublesome to find the right multimedia files.

Nowadays, there exist some researching activities on session mobility, which tend to enable seamless transfer of an on-going multimedia session between different devices based on user preferences, but in some cases, if not in the most cases, a user would be more like the system to preserve the current status of on-going session when he has to leave current rendering devices, and with the preserved multimedia session information, he can resume the original session from the progress where it has been stopped.

US 2009/241149 A1 discloses a content reproduction system which allows the user, with a remote control device, to pause the reproduction of the content from a content server on a reproducing device and to resume the reproduction of the content on another reproducing device beginning at the pause position.

US 2009/232481 A1 discloses a method for handling content to accommodate movement of a user moving from a first room with a first reproduction device to a second room with a second reproduction device.

US 2008/002945 A1 discloses a content reproduction system in which content from a content recording apparatus is played on a first reproduction device. When the content is paused, reproduction collateral information (content storage location and pause position) is recorded into a control apparatus, such as a PDA or portable phone. To execute the resume function, the control apparatus transmits the reproduction collateral information to the recording apparatus or a second reproduction apparatus.The second reproduction apparatus requests the paused content of the recording apparatus and resumes reproducing the content from the pause position on the basis of the reproduction collateral information.

### SUMMARY

According to an aspect of present invention, it enables users to record and preserve the status of an on-going multimedia session rendered on a rendering device by using a portable device, e.g. a RFID (radio frequency identification) tag, to record or store the information relating to the multimedia content, e.g. where the multimedia content is suspended, the URI (Universal Resource Identifier) of the multimedia content, video format, etc. Then the user can use the portable device to, for example, immigrate the session to another rendering device and easily resume the multimedia session from where it is stopped.

According to the aspect of present invention, it is provided a method for resuming an interrupted session of multimedia content with a rendering device. It comprises the steps of reading a status information of the interrupted session, said information being stored in a portable device; and resuming the session of the multimedia content based on the status information read.

According to the aspect of present invention, it is provided a rendering device for multimedia content. It comprises a communication module for reading from a portable device a location information of a multimedia content indicating where the multimedia content is located and a position information from where the multimedia content is to be rendered; and a rendering module for executing the session of the multimedia content based on the location information and the position information read by the communication module.

It is to be understood that more aspects and advantages of the invention will be found in the following detailed description of the present invention.

### BRIEF DESCRIPTION OF THE DRAWINGS

The accompanying drawings illustrate embodiments of the invention together with the description which serves to explain the principle of the invention. Therefore, the invention is not limited to the embodiments. In the drawings:
Fig. 1 is a block diagram showing a second example of a system for playing multimedia content according to an embodiment of present invention;
Fig. 2 is a flow chart showing a exemplary method for writing status information associated with the multimedia content into RFID tag according to the embodiment of present invention;
Fig. 3 is a diagram showing an example of status information according to the embodiment of present invention;
Fig. 4 is a block diagram showing an example of a rule-based inference module according to the embodiment of present invention;
Fig. 5 is a diagram showing fact templates for current_device, preserved_media and resumed_media according to the embodiment of present invention; and
Fig. 6 is a flow chart showing a method for resuming multimedia content according to the embodiment of present invention.

### DETAILED DESCRIPTION

An embodiment of the present invention will now be described in detail in conjunction with the drawings. In the following description, some detailed descriptions of known functions and configurations may be omitted for clarity and conciseness.

The principle of present invention provides a system with which a user can preserve a multimedia content by storing the status information of an on-going multimedia session for the multimedia content on a portable storage device, e.g. a RFID tag, usb memory etc, at any time when he watches the multimedia content played by a rendering device, e.g. DVD/BD player, a computer with audio/video decoding functionalities, mp3 player, mp4 player and other types of audio/video player (the rendering device either has a built-in display or needs an external display). And at a later time, he can use the portable device with the stored status information of the multimedia content on it to continue the session from the time when the status information is stored on the same rendering device as the previous one or a different rendering device. It shall note that the principle of present invention can also be applied to other environment, such as content that is not time dependent, e.g. video games, e-book etc.

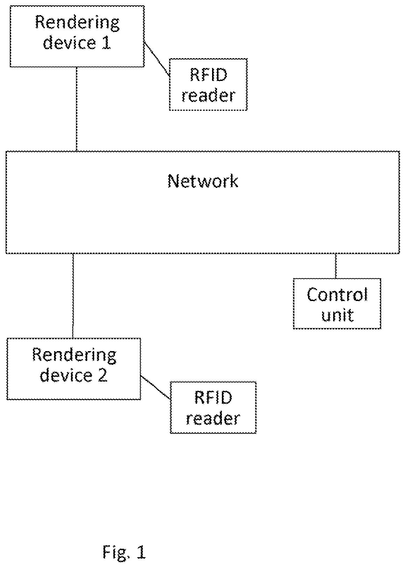

Fig. 1 is a block diagram showing an example of a system for playing multimedia content including audio and/or video according to an embodiment of present invention. In the system, it comprises two rendering devices each with a RFID reader, and they share a control unit. They are connected by a network, which can be wire-based, wireless-based or a combination of both. The control unit is used to determine information related to the multimedia content being rendered, for example, the storage location of the multimedia content and current rendering position in the multimedia content. The RFID reader is used to read and write information from and to a storage device (not shown), i.e. a RFID tag in this exemplary system. The rendering device is used to render multimedia content in a traditional manner, and besides, in compliance with the present embodiment, it can perform rendering based on the information read by the RFID reader from the RFID tag. When a user want to store or read status information of the multimedia content currently being rendered by, e.g. rendering device 1, the process of storing status information can be implemented in several ways: 1) pressing a key on a remote control; 2)selecting a command from on-screen display menu; and 3) presenting the RFID tag on the RFID reader. When using above 1) or 2) method, it shall make sure that the RFID tag is available to the RFID reader when the RFID reader needs to retrieve information from the RFID tag. Herein, because the RFID tag contains very limited memory, JSON (JavaScript Object Notation format), which is a way of taking data and turning it into a compressed form, can be used to organize the information on the RFID tag. But a person skilled in the art should other technique for organizing and compressing information can also be used. Besides, in case of other storage device, e.g. a USB memory stick, it shall make sure that the USB memory stick is connected to the reader.

According to a first embodiment of present invention using the system shown in the Fig. 1, the network is a home network; the rendering device 1 and the rendering device 2 are two hardware video players, which can play video/ audio files on a local hard disk or a remote hard disk and are connected to a TV separately, or two computers having software video players in two geographical locations, e.g. two different rooms. The control unit is implemented as a module in the hardware or software video player. The multimedia content is stored with one of currently available audio/video formats in a storage device accessible to the both rendering devices, e.g. the hard disk of any rendering device or a dedicated storage device. When the user wants to move from a room to the other one in the middle of playing the multimedia content, he stores the status information of the multimedia content by presenting the RFID tag on the RFID reader. Herein, the status information includes the storage location of the multimedia content and the current position in the multimedia content that can indicated by the frame number or the time relative to the multimedia content. After he arrives to the other room, he can continue to consume the multimedia content from the position stored on the RFID tag by presenting the RFID tag on the RFID reader. Herein, a person skilled in the art can devise whether or not to stop playing the multimedia content after the user stores the status information in the concrete implementation of the principle of the invention.

In the first embodiment, the RFID tag has two states, i.e. state of carrying information and state of carrying no information, and the two states transit to each other by presenting on the RFID reader. In other words, if current state is state of carrying no information, the RFID reader will write information on the RFID tag when the tag is presented to the reader. And if current state is state of carrying information, the RFID reader will read information and erase the RFID tag after the tag is presented to the reader. However, it shall note other methods for reading and writing information can also be used. For example, if the operation status of the multimedia content is play when the tag is presented to the reader, the reader writes information to the tag, and if the operation status of the multimedia content is not play when the tag is presented, the reader reads information.

It shall note that configuration of the system varies with different implementations.

According to a variant, the rendering device can each be equipped with a control unit. In this example, the rendering devices are hardware or software video players in different locations; the control unit is implemented in a content server, e.g. a VoD server, which streams the multimedia content to the rendering devices and is in a location different from the rendering devices. When the user stores the status information of the multimedia content by presenting the RFID tag on the RFID reader, the rendering device communicates with the control unit to get the current rendering position of the multimedia content and then uses the RFID reader to write the storage location of the multimedia content and the current rendering position to the RFID tag. When the user wants to continue the multimedia content at a later time on the same rendering device or a different rendering device, he can continue the playing by presenting the RFID tag on the RFID reader.

According to another variant, the rendering devices share a common RFID reader and a single control unit. The RFID reader and the control unit can be implemented in a single device or two different devices. The rendering devices are set top boxes (STBs) that can play locally stored multimedia content. In order to transfer the multimedia content locally stored and currently being rendered from a first STB to a second STB, the user uses on-screen display menu on the first STB to instruct the RFID reader to store status information of the multimedia content, and then uses the on-screen display menu on the second STB to instruct the RFID reader to read from the RFID tag so as to continue the play of the multimedia content. In a variant, the remote control of the STB is equipped with two keys for reading and writing, which carry out the similar functions as on-screen display menu.

According to another variant, a rendering device having a RFID reader and a control unit is a hardware or software video player or DVD player. The multimedia content is stored on the storage device, e.g. DVD disk or hard disk attached to the player. In case of hardware or software video player, the status information includes the location, i.e. file path and file name of the multimedia content and current position. When it uses DVD disk, the location is used to indicate the source is on a DVD disk, and the position is used to indicate since where the content has not been played.

It shall note although above four systems are separately illustrated, their features can be combined, removed and substituted in the concrete implementation. Furthermore, in some implementation, a system may implement at least two of abovementioned systems in it.

The multimedia content can be classified into two categories: one-to-one type (one connection carrying data of the content can only correspond to a rendering device) and one-to-multiple type (one connection carrying data of the content can correspond to at least one rendering device). Content of one-to-one type refers to content that is conveyed on a dedicated link for each rendering device that plays the content, and the rendering devices playing the same content are independent of each other. For example, multimedia content stored on a local or remote storage device and consumed by a rendering device via a streaming connection; the VoD multimedia content where each requesting rendering device needs to establish a streaming connection with the content server; and the content on DVD disk etc. The one-to-multiple type content refers to content that is conveyed on a shared link for at least one rendering device that plays the content. Normally, the content of this type includes content that is broadcasted or multicasted.

According to another variant, in order to enable a system to provide content of one-to-multiple type, a recording device is needed. In this example, each rendering device is equipped with a RFID reader and a control unit with similar functions as aforementioned. In addition, a multicast server is connected to the network for providing multimedia content via multicast. Normally, the rendering device cannot change the playing position of the multicast content, and it passively receives content from the multicast server through a multicast group. A recording device is used to record the multicast content and send the recorded multicast content in response to the rendering device's commands. Firstly a user uses rendering device 1 to receive the multimedia content, i.e. multicast program, via multicast from the multicast server. If the user wants to use the rendering device 2 to continue the multimedia content without losing any content in the time period when he moves from the rendering device 1 to the rendering device 2, he presents the RFID tag on the RFID reader. The control unit will instruct the recording device to record the multimedia content currently being received by the rendering device 1, and feed the RFID reader with status information of the multimedia content, so that the RFID reader can write such status information to the RFID tag. Herein, the status information includes location information indicating where the recorded content can be found, i.e. file path of the recorded content in the recording device, and position information indicating from when in the recorded content the recorded content starts to play.

In this example, the starting position normally is the beginning of the recorded content. However, in a variant, the recording device keeps recording the multimedia content. In this case, starting position is useful for a later continuation of play.

Besides, the rendering devices share a common recording device. However, in a variant, each rendering device has a recording device. In another variant, some of rendering devices share a common recording device, and each of the rest has a recording device.

According to another variant, the multimedia content provider provides not only the multicast server but also a VoD server, i.e. multimedia content are provided on both servers. When a user watching a multimedia content on a rendering device from the multicast server via multicast presents a RFID tag on a RFID reader, the control unit will inquiry with VoD server and get corresponding status information of the multimedia content in the VoD server, i.e. file path including the file name of the multimedia content, which is the same as being multicasted by the multicast server, in the VoD server, and position information indicating from when/where the multimedia content in the VoD server shall start to play.

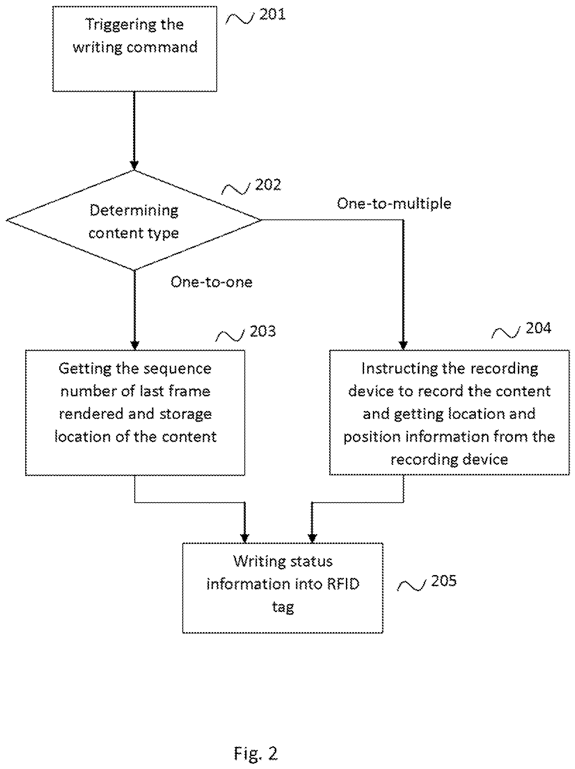

In an exemplary hybrid system, it comprises at least one system providing not only one-to-one type and one-to-multiple type. Fig. 2 is a flow chart showing an exemplary method for writing status information associated with the multimedia content into RFID tag according to the embodiment of present invention. In the step 201, the rendering device receives a command for writing status information into a RFID tag in response to an action as aforementioned, e.g. presenting the RFID tag, selecting from a menu etc. In the step 202, the rendering device determines the type of the multimedia content currently being rendered. If it is one-to-one type, the rendering device gets the storage location and the rendering position (e.g. the sequence number of last frame rendered by the rendering device at the time of receiving the command or determining the type). If it is one-to-multiple type, the control unit instructs a recording device to record the multimedia content and gets location information and rendering position information associated with the multimedia content stored in the recording device from the recording device. In the step 205, the rendering device uses the RFID reader to write status information associated with the multimedia content (including location information and rendering position information) into the RFID tag.

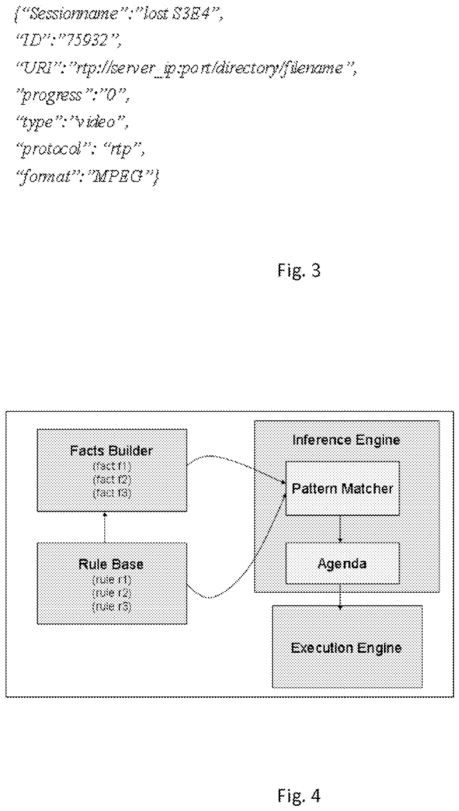

In another exemplary hybrid system, the status information can include more information for other purpose. For example, some rendering devices may have lower processing, decoding capability, or even cannot process some multimedia content than the others. The additional information in the status information can help the rendering device to decide if it can process the multimedia content. In this example, we call a connection, either unicast, multicast or broadcast, carrying the multimedia content as multimedia session. In this example, the status information comprises all information needed for continuing the session, which comprises session name, session ID, URI (uniform resource identification) of the multimedia source as location information, the current session progress as position information. Other information, which depends on special category of the multimedia stream, is also needed to make the rendering convenient for the rendering devices, such as multimedia type (audio, video, etc), transport protocol (RTP, MMS, http, etc), multimedia format (H.261 video, Mpeg video, etc.), starting time, real-time or non real-time type, etc. The session name is usually the multimedia file name of a not-real-time session or the program name of a real-time session, which is convenient for user to understand what the session is about. The session ID is an integer number that is generated, e.g. by the control unit and is used to uniquely identify a multimedia session. The URI of the multimedia source is used to identify the location of multimedia content. The current session progress is the stop time of the session or the last frame rendered when stopping or when the rendering device issues the write command, which provides the start point for a later resuming. It works as follow:
---When the user pushes a preserve key on a remote, the system will decide whether the current on-going session of multimedia content is real-time or not.
---If it is real-time, the control unit tries to find out the continuous time that the session will last. The time can be obtained from ESG (Electronic Service Guide) or other sources, such as the web page of an Internet real-time program. According to the time, the control unit starts recording function to record the real-time session and stores the recorded content into a local or remote storage. Before recording the session, the control unit updates the status information, i.e. session description information aforementioned, with new URI, new multimedia type and format according to the storage content. The control unit alters the real-time type into non-real-time type and generates a session ID for each unique multimedia session, and inserts it within the corresponding session description information. For example, when a user is watching a TV series - lost season 3 episode 4, and he wants to preserve the program. After he sends command 'preserve', the control unit will record the following part of the TV series into a local disk, and generates new URI to present it, then it forms status information as shown in the Fig. 3. As can be seen from the Fig. 3, the URI is used to indicate the new location of recorded program. The progress setting to "0" means the next resuming should start from the very beginning of the recorded program. Other items, such as type, protocol, format, are used for helping decide whether a new selected rendering device can support this program's resuming, which will be described in paragraphs below.

-- If the control unit decides that the multimedia session belongs to non-real-time type, it will just updates the above session description information with the last frame rendered and storage location.
-- After the control unit updates the session description information for an on-going stream, it prompts the user to put an RFID tag near the RFID reader and writes the session description information into the memory of the RFID tag.

In order to help a rendering device assess whether it supports the multimedia content or not, a rule-based inference module is added. The module can be integrated into the rendering device or the control unit if the rendering device and the control unit are in different physical devices. Fig. 4 is a block diagram showing an example of a rule-based inference module according to an embodiment of present invention. The module includes a fact builder, a rule base, an inference engine and an execution engine. The inference engine further includes a pattern matcher and an agenda. In the rule-based inference module, the rule base is used to store the pre-defined rules, which can be used by fact builder to retrieve facts and by the inference engine to do pattern matching. The fact builder uses the information, which is read from the RFID tag, and device description information, which the device has registered, e.g. in the control unit or other storage device, to retrieve corresponding facts according to the fact template definitions. The pattern matcher of the inference engine uses the information from the RFID tags, the device description information and rules from the rule base to decide one or more actions. The decided actions are arranged into the agenda and queued here for execution. For example, the decided actions are arranged in a FIFO (first in first out) buffer. The execution engine is used to execute the actions in the agenda.

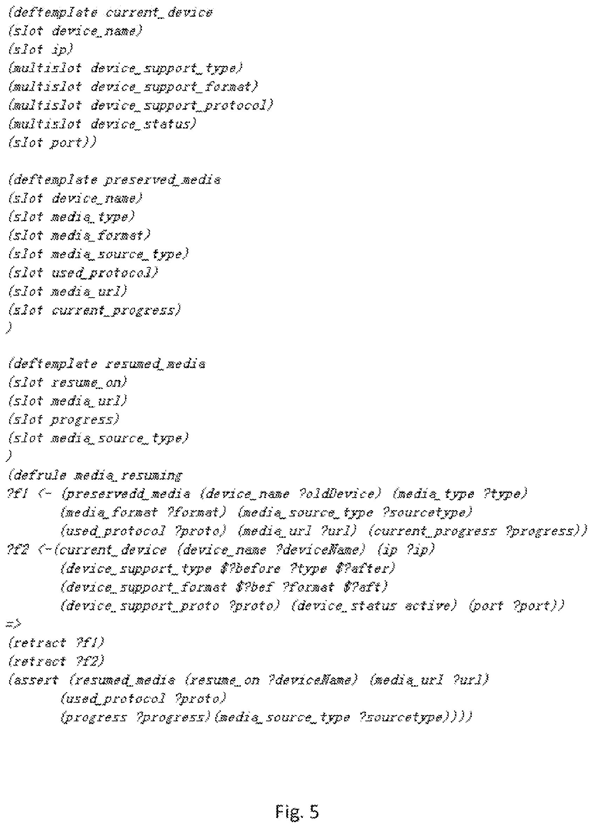

It shall note in different concrete implementation the information included in the RFID tag and device description information is different, and it shall correspond to what is needed by rules in the rule base. A concrete example is described below. A rule is composed of an if portion and a then portion. The if portion of a rule is a series of patterns which specify one or more facts (or data) which cause the rule to be applicable. The process of matching facts to patterns is called pattern matching. The if portion of a rule can further be thought of as the whenever portion of a rule since multiple patterns may be matched for a given arrangement of facts. The then portion of a rule is one or more actions to be executed when the rule is applicable. Usually accompanying the rule definition, there are some fact templates, with which the inference engine can use concrete data to retrieve the required facts. Fig. 5 is a diagram showing three fact templates separately for current_device, preserved_media, and resumed_media. The capability, such as supported formats and protocols, device status, and device configuration, such as IP address and port, etc., for a rendering device on which the multimedia content is going to be rendered, are presented in the current_device fact template. In the preserved_media fact template, the session description information of the preserved multimedia content are defined. The resumed_media fact template defines the inference result if the pattern matching is successful.

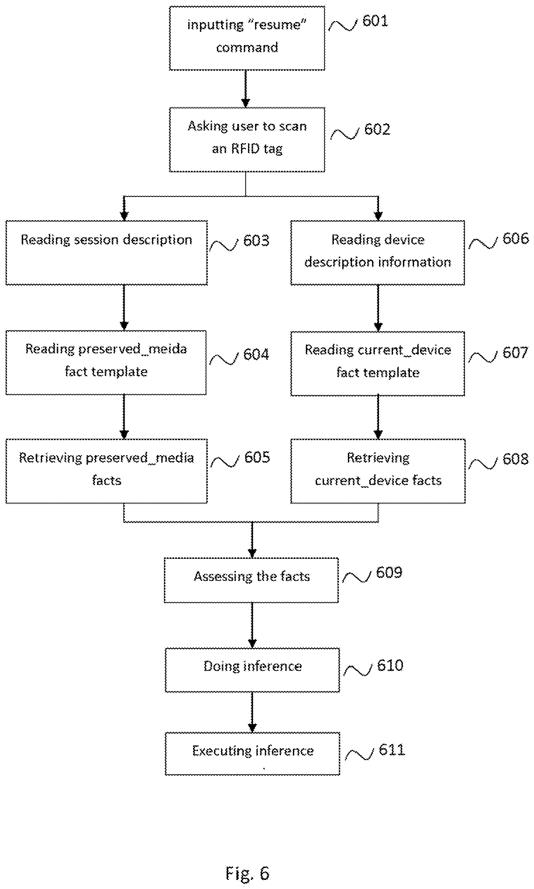

Fig. 6 is a flow chart showing a method for resuming multimedia content according to the embodiment.

In the step 601, when the user intends to resume a preserved multimedia content at a later time on the same or a different rendering device, he issues a "resume" command by pressing a key on the remote control.

In the step 602, after the rendering device receives the "resume" command, it then asks the user to scan a RFID tag.

In the step 603, by scanning the RFID tag, the RFID reader reads the session description information. And in the step 604, the inference module reads preserved_media fact template. In the step 605, the inference module retrieves facts for the preserved_media.

In parallel, in the steps 606, 607 and 608, the inference module reads its device description information and the current_device fact template, and retrieves facts for the current device.

In the steps 609 and 610, the inference module assesses the facts from the steps 605 and 608, uses the facts to determine if the rendering device supports the multimedia content, e.g. by using resumed_media fact template to do the pattern matching, and inserts inference result into the agenda. Herein, as an example, the inference result includes information indicating which device the preserved multimedia content can be resumed on, what kind of media format and media transmission protocols are used, where the media is located, and where the media should be started. Such information can be easily used by the rendering device to configure itself and continue the preserved multimedia content.

In the step 611, the multimedia content is resumed by executing the inference result.

In an embodiment, after resuming, the information on the RFID tag is erased.

In an embodiment, the inference module is integrated into the rendering device. According to a variant, it is integrated into the control unit.

According to a variant, the RFID tag or storage for storing information as necessary for the present invention is integrated into a remote control or a mobile phone etc.

## Claims

1. A method for resuming a session of multimedia content with a rendering device, comprising the steps of
reading (603) a status information of the session, said status information being stored in a portable device and comprising location information indicating a storage location of the multimedia content and position information indicating a temporal position relative to the multimedia content;
erasing the status information from the portable device; and
resuming the session of the multimedia content based on the status information read, wherein the status information is stored into the portable device upon a command from a user to store status information of an on-going session of the multimedia content, wherein the method further comprising,
in response to a command from a user to store status information of the ongoing session of the multimedia content at a temporal position relative to the multimedia content, determining (202) content type of the multimedia content;
if the content type is streaming connection, writing (205) location information indicating a storage location of the multimedia content and position information indicating this temporal position relative to the multimedia content into the portable device; and
if the content type is broadcast or multicast, instructing (204) a recording device to record the multimedia content and writing (205) location information indicating storage location for recorded multimedia content in the recording device and the position information indicating a temporal position relative to the recorded multimedia content into the portable device, or when the content type is multicast, writing location information indicating storage location of a same multimedia content in a VoD server and the position information indicating a temporal position relative to the same multimedia content into the portable device.

2. The method of claim 1, wherein resuming step is performed by a rendering device which is different from the rendering device used prior to storing status information of the session of the multimedia content.

3. The method of claim 1, wherein, the portable device is further used to store for the multimedia content at least one piece of information among type of the multimedia content, format in which the multimedia content is present and protocol that is used to convey the multimedia content, and the method further comprises
reading (603) the at least one piece of information from the portable device;
reading (606) at least one corresponding information about a rendering device among supported type, supported format and supported protocol; and
if determining (609) the rendering device supports the multimedia content by using the at least one piece of information and the at least one corresponding information about the rendering device, playing the multimedia content starting from the temporal position.

4. The method of the claim 1, wherein, a different content source provides the same content as the multimedia content, the location information indicates a location of the content of the different content source and the position information indicates a position relative to the content of the different content source corresponding to the temporal position relative to the multimedia content.

5. A rendering device for multimedia content, comprising
a communication module for reading from a portable device a status information comprising a location information of a multimedia content indicating where the multimedia content is located and a position information from where the multimedia content is to be rendered and for erasing the location information and the position information from the portable device; and
a rendering module for executing the session of the multimedia content based on the location information and the position information read by the communication module,
wherein the status information is stored into the portable device upon a command from a user to store status information of an on-going session of the multimedia content, wherein it further comprises
a determining module for in response to a command from a user to store status information of the ongoing session of the multimedia content at a temporal position relative to the multimedia content determining content type of the multimedia content; for if the content type is streaming connection, instructing the communication module to write location information indicating a storage location of the multimedia content and position information indicating this temporal position relative to the multimedia content into the portable device; and for if the content type is broadcast or multicast, instructing a recording device to record the multimedia content and instructing the communication module to write location information indicating storage location for recorded multimedia content in the recording device and the position information indicating a temporal position relative to the recorded multimedia content into the portable device, or when the content type is multicast, instructing the communication module to write location information indicating storage location of a same multimedia content in a VoD server and the position information indicating a temporal position relative to the same multimedia content into the portable device.

6. The device of the claim 5, wherein, it further comprises a control module for resuming the session of the multimedia content on the rendering device which is different from a rendering device used for rendering the multimedia content before resumption.

7. The device of the claim 5, the portable device is a RFID tag and the communication module is a RFID reader.

8. The device of the claim 5, wherein, the communication module is further used for reading at least one piece of information among type of the multimedia content, format in which the multimedia content is present and protocol that is used to convey the multimedia content from the portable device and reading the at least one corresponding information about a rendering device among supported type, supported format and supported protocol; and
the determining module for determining if the rendering device supports the multimedia content by using the at least one piece of information and the at least one corresponding information about the rendering device.

## Patentansprüche

1. Verfahren zum Wiederaufnehmen einer Sitzung von Multimediainhalt mit einer Rendering-Vorrichtung, wobei das Verfahren die folgenden Schritte umfasst:
Lesen (603) einer Statusinformation der Sitzung, wobei die Statusinformation in einer tragbaren Vorrichtung gespeichert ist und eine Ortsinformation, die einen Speicherplatz des Multimediainhalts angibt, und eine Positionsinformation, die eine zeitliche Position relativ zu dem Multimediainhalt angibt, umfasst;
Löschen der Statusinformation aus der tragbaren Vorrichtung; und
Wiederaufnehmen der Sitzung des Multimediainhalts auf der Grundlage der gelesenen Statusinformation, wobei die Statusinformation auf einen Befehl von einem Nutzer zum Speichern einer Statusinformation einer andauernden Sitzung des Multimediainhalts in der tragbaren Vorrichtung gespeichert wird, wobei das Verfahren ferner umfasst:
Bestimmen (202) des Inhaltstyps des Multimediainhalts als Reaktion auf einen Befehl von einem Nutzer zum Speichern einer Statusinformation der andauernden Sitzung des Multimediainhalts bei einer zeitlichen Position relativ zu dem Multimediainhalt;
Schreiben (205) einer Ortsinformation, die einen Speicherplatz des Multimediainhalts angibt, und einer Positionsinformation, die diese zeitliche Position relativ zu dem Multimediainhalt angibt, in die tragbare Vorrichtung, falls der Inhaltstyp eine Streaming-Verbindung ist; und
Anweisen (204), dass eine Aufzeichnungsvorrichtung den Multimediainhalt aufzeichnet, und Schreiben (205) einer Ortsinformation, die den Speicherplatz für den aufgezeichneten Multimediainhalt angibt, in die Aufzeichnungsvorrichtung und der Positionsinformation, die eine zeitliche Position relativ zu dem aufgezeichneten Multimediainhalt angibt, in die tragbare Vorrichtung, falls der Inhaltstyp Rundsendung oder Sammelsendung ist, oder Schreiben einer Ortsinformation, die den Speicherplatz eines selben Multimediainhalts in einem VoD-Server angibt, und der Positionsinformation, die eine zeitliche Position relativ zu demselben Multimediainhalt angibt, in die tragbare Vorrichtung, wenn der Inhaltstyp Sammelsendung ist.

2. Verfahren nach Anspruch 1, wobei der Schritt des Wiederaufnehmens durch eine Renderingvorrichtung ausgeführt wird, die von der vor dem Speichern einer Statusinformation der Sitzung des Multimediainhalts verwendeten Rendering-Vorrichtung verschieden ist.

3. Verfahren nach Anspruch 1, wobei die tragbare Vorrichtung ferner zum Speichern mindestens einer Informationseinheit unter dem Typ des Multimediainhalts, dem Format, in dem der Multimediainhalt vorliegt, und dem Protokoll, das zum Übermitteln des Multimediainhalts verwendet wird, für den Multimediainhalt verwendet wird, und wobei das Verfahren ferner umfasst:
Lesen (603) der mindestens einer Informationseinheit von der tragbaren Vorrichtung;
Lesen (606) mindestens einer entsprechenden Information über eine Rendering-Vorrichtung unter unterstütztem Typ, unterstütztem Format und unterstütztem Protokoll; und
Wiedergeben des Multimediainhalts, beginnend von der zeitlichen Position, falls unter Verwendung der mindestens einen Informationseinheit und der mindestens einen entsprechenden Information über die Rendering-Vorrichtung bestimmt wird (609), dass die Rendering-Vorrichtung den Multimediainhalt unterstützt.

4. Verfahren nach Anspruch 1, wobei eine andere Inhaltsquelle denselben Inhalt wie den Multimediainhalt bereitstellt, wobei die Ortsinformation einen Ort des Inhalts der anderen Inhaltsquelle angibt und wobei die Positionsinformation eine Position relativ zu dem Inhalt der anderen Inhaltsquelle, die der zeitlichen Position relativ zu dem Multimediainhalt entspricht, angibt.

5. Rendering-Vorrichtung für Multimediainhalt, wobei die Rendering-Vorrichtung umfasst:
ein Kommunikationsmodul zum Lesen einer Statusinformation, die eine Ortsinformation eines Multimediainhalts, die angibt, wo sich der Multimediainhalt befindet, und eine Positionsinformation,
von wo der Multimediainhalt gerendert werden soll, umfasst, von einer tragbaren Vorrichtung und zum Löschen der Ortsinformation und der Positionsinformation von der tragbaren Vorrichtung; und
ein Rendering-Modul zum Ausführen der Sitzung des Multimediainhalts auf der Grundlage der Ortsinformation und der Positionsinformation, die durch das Kommunikationsmodul gelesen werden,
wobei die Statusinformation auf einen Befehl von einem Nutzer zum Speichern der Statusinformation einer andauernden Sitzung des Multimediainhalts in der tragbaren Vorrichtung gespeichert wird, wobei die Rendering-Vorrichtung ferner umfasst:
ein Bestimmungsmodul, um als Reaktion auf einen Befehl von einem Nutzer eine Statusinformation der andauernden Sitzung des Multimediainhalts bei einer zeitlichen Position relativ zu dem Multimediainhalts-Bestimmungsinhalts-Typ des Multimediainhalts zu speichern; um anzuweisen, dass das Kommunikationsmodul eine Ortsinformation, die einen Speicherplatz des Multimediainhalts angibt, und eine Positionsinformation, die diese zeitliche Position relativ zu dem Multimediainhalt angibt, in die tragbare Vorrichtung schreibt, falls der Inhaltstyp eine Streaming-Verbindung ist; und um anzuweisen, dass eine Aufzeichnungsvorrichtung den Multimediainhalt aufzeichnet, und um anzuweisen, dass das Kommunikationsmodul eine Ortsinformation, die den Speicherplatz für aufgezeichneten Multimediainhalt angibt, in die Aufzeichnungsvorrichtung und die Positionsinformation, die eine zeitliche Position relativ zu dem aufgezeichneten Multimediainhalt angibt, in die tragbare Vorrichtung schreibt, falls der Inhaltstyp Rundsendung oder Sammelsendung ist, oder um anzuweisen, dass das Kommunikationsmodul eine Ortsinformation, die den Speicherplatz eines selben Multimediainhalts in einem VoD-Server angibt, und die Positionsinformation, die eine zeitliche Position relativ zu demselben Multimediainhalt angibt, in die tragbare Vorrichtung schreibt, wenn der Inhaltstyp Sammelsendung ist.

6. Vorrichtung nach Anspruch 5, wobei sie ferner ein Steuermodul zum Wiederaufnehmen der Sitzung des Multimediainhalts in der Rendering-Vorrichtung, die von einer zum Rendern des Multimediainhalts vor der Wiederaufnahme verwendeten Rendering-Vorrichtung verschieden ist, umfasst.

7. Vorrichtung nach Anspruch 5, wobei die tragbare Vorrichtung ein RFID-Etikett ist und wobei das Kommunikationsmodul ein RFID-Leser ist.

8. Vorrichtung nach Anspruch 5, wobei das Kommunikationsmodul ferner zum Lesen mindestens einer Informationseinheit unter dem Typ des Multimediainhalts, dem Format, in dem der Multimediainhalt vorliegt, und dem Protokoll, das zum Übermitteln des Multimediainhalts von der tragbaren Vorrichtung verwendet wird, und zum Lesen der mindestens einen entsprechenden Information über eine Rendering-Vorrichtung unter unterstütztem Typ, unterstütztem Format und unterstütztem Protokoll verwendet wird; und
das Bestimmungsmodul zum Bestimmen, ob die Rendering-Vorrichtung den Multimediainhalt unterstützt, unter Verwendung der mindestens einen Informationseinheit und der mindestens einen entsprechenden Information über die Rendering-Vorrichtung verwendet wird.

## Revendications

1. Procédé pour reprendre une session de contenu multimédia avec un dispositif de rendu, comprenant les étapes suivantes :
lecture (603) d'informations de statut de la session, lesdites informations de statut étant stockées sur un dispositif portable et comprenant des informations de localisation indiquant un emplacement de stockage du contenu multimédia et des informations de position indiquant une position temporelle relative au contenu multimédia ;
effacement des informations de statut du dispositif portable ; et
reprise de la session du contenu multimédia d'après les informations de statut lues, dans lequel les informations de statut sont stockées sur le dispositif portable sur commande d'un utilisateur pour stocker des informations de statut d'une session en cours du contenu multimédia, dans lequel le procédé comprend en outre,
en réponse à une commande d'un utilisateur pour stocker des informations de statut de la session en cours du contenu multimédia à une position temporelle relative au contenu multimédia, détermination (202) du type de contenu du contenu multimédia ;
si le contenu est de type connexion en streaming, écriture (205) d'informations de localisation indiquant un emplacement de stockage du contenu multimédia et d'informations de position indiquant cette position temporelle relative au contenu multimédia sur le dispositif portable ; et
si le contenu est de type diffusion ou multidiffusion, envoi d'une instruction indiquant (204) à un dispositif d'enregistrement d'enregistrer le contenu multimédia et écriture (205) d'informations de localisation indiquant un emplacement de stockage pour le contenu multimédia enregistré sur le dispositif d'enregistrement et les informations de position indiquant une position temporelle relative au contenu multimédia enregistré sur le dispositif portable, ou lorsque le contenu est de type multidiffusion, écriture d'informations de localisation indiquant un emplacement de stockage d'un contenu multimédia identique sur un serveur de VOD et des informations de position indiquant une position temporelle relative au contenu multimédia identique sur le dispositif portable.

2. Procédé selon la revendication 1, dans lequel l'étape de reprise est effectuée par un dispositif de rendu qui est différent du dispositif de rendu utilisé avant le stockage des informations de statut de la session du contenu multimédia.

3. Procédé selon la revendication 1, dans lequel le dispositif portable est en outre utilisé pour stocker, pour le contenu multimédia, au moins un élément d'information parmi le type du contenu multimédia, le format dans lequel le contenu multimédia est présent ou le protocole utilisé pour transmettre le contenu multimédia, et le procédé comprend en outre
la lecture (603) du au moins un élément d'information à partir du dispositif portable ;
la lecture (606) d'au moins une information correspondante relative à un dispositif de rendu parmi le type supporté, le format supporté et le protocole supporté ; et
s'il est déterminé (609) que le dispositif de rendu supporte le contenu multimédia à l'aide du au moins un élément d'information et de la au moins une information correspondante relative au dispositif de rendu, la lecture du contenu multimédia à partir de la position temporelle.

4. Procédé selon la revendication 1, dans lequel une source de contenu différente fournit le même contenu que le contenu multimédia, les informations de localisation indiquent un emplacement du contenu de la source de contenu différente et les informations de position indiquent une position relative au contenu de la source de contenu différente correspondant à la position temporelle relative au contenu multimédia.

5. Dispositif de rendu pour du contenu multimédia, comprenant :
un module de communication pour lire à partir d'un dispositif portable des informations de statut comprenant des informations de localisation d'un contenu multimédia indiquant où se trouve le contenu multimédia et des informations de position relatives à l'endroit à partir duquel le contenu multimédia doit être rendu et pour effacer les informations de localisation et les informations de position du dispositif portable ; et
un module de rendu pour exécuter la session du contenu multimédia d'après les informations de localisation et les informations de position lues par le module de communication,
dans lequel les informations de statut sont stockées sur le dispositif portable sur commande d'un utilisateur pour stocker des informations de statut d'une session en cours du contenu multimédia, dans lequel il comprend en outre
un module de détermination pour, en réponse à une commande d'un utilisateur pour stocker des informations de statut de la session en cours du contenu multimédia à une position temporelle relative au contenu multimédia, déterminer le type de contenu du contenu multimédia ; pour, si le contenu est de type connexion en streaming, indiquer au module de communication d'écrire des informations de localisation indiquant un emplacement de stockage du contenu multimédia et des informations de position indiquant cette position temporelle relative au contenu multimédia sur le dispositif portable ; et pour, si le contenu est de type diffusion ou multidiffusion, indiquer à un dispositif d'enregistrement d'enregistrer le contenu multimédia et indiquer au module de communication d'écrire des informations de localisation indiquant un emplacement de stockage pour le contenu multimédia enregistré sur le dispositif d'enregistrement et les informations de position indiquant une position temporelle relative au contenu multimédia enregistré sur le dispositif portable, ou, lorsque le contenu est de type multidiffusion, indiquer au module de communication d'écrire des informations de localisation indiquant un emplacement de stockage d'un contenu multimédia identique sur un serveur de VOD et les informations de position indiquant une position temporelle relative au contenu multimédia identique sur le dispositif portable.

6. Dispositif selon la revendication 5, dans lequel il comprend en outre un module de commande pour reprendre la session du contenu multimédia sur le dispositif de rendu qui est différent d'un dispositif de rendu utilisé pour le rendu du contenu multimédia avant la reprise.

7. Dispositif selon la revendication 5, dans lequel le dispositif portable est une étiquette RFID et le module de communication est un lecteur RFID.

8. Dispositif selon la revendication 5, dans lequel le module de communication est en outre utilisé pour lire au moins un élément d'information parmi le type du contenu multimédia, le format dans lequel le contenu multimédia est présent ou le protocole utilisé pour transmettre le contenu multimédia depuis le dispositif portable et lire la au moins une information correspondante relative à un dispositif de rendu parmi le type supporté, le format supporté et le protocole supporté ; et
le module de détermination pour déterminer si le dispositif de rendu supporte le contenu multimédia à l'aide du au moins un élément d'information et de la au moins une information correspondante relative au dispositif de rendu.
